# EUROPEAN PATENT SPECIFICATION

(11) **EP 4 228 452 B1**
(45) Date of publication and mention of the grant of the patent: **01.01.2025**
(21) Application number: 21790160.2
(22) Date of filing: 08.10.2021
(51) Int. Cl.: A24F 40/40, A24F 40/51, A24F 40/53, A61M 11/04, A61M 15/06

(54) **AEROSOL GENERATION DEVICE WITH COVER AND INSULATING AIR GAP**
AEROSOLERZEUGUNGSVORRICHTUNG MIT ABDECKUNG UND ISOLIERENDEM LUFTSPALT
DISPOSITIF DE GÉNÉRATION D'AÉROSOL COMPRENANT UN COUVERCLE ET UN ENTREFER ISOLANT

(30) Priority: 16.10.2020 EP 20202371
(43) Date of publication of application: 23.08.2023
(73) Proprietor: JT International SA, 1202 Geneva (CH)
(72) Inventor: BOUCHUIGUIR, Layth Sliman, 1293 Bellevue (CH); MASON, Jon, SL6 7JF Maidenhead (GB)
(74) Representative: Bardehle Pagenberg Partnerschaft mbB Patentanwälte Rechtsanwälte
(86) International application number: PCT/EP2021/077896
(87) International publication number: WO 2022/078904

(56) References cited:
- EP-A1- 3 685 690
- EP-A1- 3 685 691
- EP-A1- 3 711 571
- WO-A1-2019/084161
- GB-A- 2 473 264
- US-A1- 2009 095 287
- US-A1- 2020 297 948
- US-A1- 2020 316 325

## Description

### FIELD OF INVENTION

The invention relates to an aerosol generation device, in particular an aerosol generation device comprising a main housing, a cover, and a heat insulating air gap formed between the main housing and the cover.

### TECHNICAL BACKGROUND

Aerosol generation devices commonly found on the marked comprise an aerosol generation unit for generating an aerosol for consumption by a user of the aerosol generation device. The aerosol generation unit typically comprises a heating unit that generates an aerosol by applying heat to an aerosol generation substrate. While a part of the heat generated by the heating unit in the process of generating the aerosol is dissipated through the aerosol and the airflow that transports the aerosol to the user for inhalation, a substantial part of the generated heat is dissipated through the device housing of the aerosol generation device. As a consequence, the outer surface of the aerosol generation device, in particular regions that are proximate the heating unit, can become hot. As a consequence, the portions of the device may become too hot to comfortably hold or touch, and may lead to injuries to the user.

EP 3 711 571 A1 relates to a smoking substitute device.

US 2009/095287 A1 relates to an apparatus for the vaporization of materials that releases active constituents for inhalation without the creation of harmful byproducts such as carcinogens associated with combustion and inhalation of substances.

This document shows and describes a device which comprises the features mentioned in the preamble of the present claim 1.

GB 2 473 264 A relates to a device for delivering volatilized material.

US 2020/316325 A1 relates an electrically operated aerosol-generating system. EP 3 685 690 A1 relates an apparatus arranged to heat smokable material.

Some aerosol generation devices attempt to address the issue of heat dissipation by employing venting holes through which heat can dissipate from the inside of the aerosol generation device to the outside. However, fabricating the vent holes increases the manufacturing complexity. Furthermore, the vent holes represent ingress points for liquids, dirt and other particles that can damage the aerosol generation device, making the aerosol generation device less durable.

Some aerosol generation devices provide a thermally insulating element such as thermally insulating sleeve or wrapper. The thermally insulating element commonly encloses or wraps around at least the heating unit to reduce thermal transfer of heat from the heating unit to the outer surface of the device housing. However, the thermally insulating element increases the overall size of the aerosol generation device, and needs to conform to spatial requirements posed by the inner space of the aerosol generation device occupied by a plurality of components of the aerosol generation device. This increases the manufacturing complexity and drives up manufacturing costs. Therefore, there is a need for an aerosol generation device with a thermally insulated outer surface that is durable and cost-efficient to manufacture.

### SUMMARY OF THE INVENTION

Some, or all of the above objectives are achieved by the invention as defined by the features of the independent claim 1.

Preferred embodiments of the invention are defined by the features of the dependent claims.

According to claim 1, the invention is an aerosol generation device comprising a main body defined by a main housing, and a cover element that is detachably attached or connected to the main housing and covers a portion of the main housing to form part of the exterior surface of the main housing. The main housing and the cover element are shaped such that an air gap is formed between the main housing and the cover element. An air gap formed between the cover element and the main housing is advantageous because it provides a thermally insulating element without the need for a special insulating material and is therefore simple and cost-efficient to manufacture. Additionally, a detachable cover element provides access to components of the aerosol generation that are protected by the cover element.

According to an aspect, the entire cover element covers a portion of the main housing.

The latter aspect is advantageous because it reduces the size of the cover element to a portion of the size of the main housing.

According to another aspect, the air gap is formed between the portion of the main housing covered by the cover element and the cover element.

The latter aspect is advantageous because the air gap is provided only between the cover element and the portion of the main housing covered by the cover element, i.e. the cover element alone suffices for providing the air gap and thus the size of the aerosol generation device can be decreased.

According to another aspect, the air gap is formed between the entire portion of the main housing covered by the cover element and the entire cover element except at positions where the cover element and the main housing are adjoined.

The latter aspect is advantageous because it maximizes the air gap between the cover element and the main housing to maximize a thermally insulating property provided to the aerosol generation device.

According to another aspect, the air gap is enclosed between the main housing and the cover element.

The latter aspect is advantageous because enclosing the air gap increases a thermally insulating property provided to the aerosol generation device by the air gap, and further protects the air gap from ingress of liquids, dirt, and other particulates. This increases the durability of the aerosol generation device.

According to another aspect, the aerosol generation device comprises a heating unit for heating an aerosol generation substrate.

According to another aspect, a section or the entire air gap is formed adjacent to a section of the portion of the main housing of which at least a part is adjacent to the heating unit.

According to another aspect in the penultimate aspect, a section of or the entire air gap is formed adjacent to a section of the main housing of which the entire section is adjacent to the heating unit.

The two preceding aspects are advantageous because they respectively increase the thermally insulating characteristic of the aerosol generation device by providing a thermally insulating air gap proximate the portion of the aerosol generation device that is heated the most by the heating unit.

According a another aspect, different sections of the air gap have different average gap distances.

The latter aspect is advantageous because it allows the air gap to adapt to the fact that different portions of the outer surface of the device housing may require different thermally insulting characteristics. Portions arranged proximate to a heating unit provided in the aerosol generation device may require a larger air gap, whereas portions arranged further away from the heat source may require only a smaller air gap. This allows the aerosol generation device to be provided with suitable thermally insulating properties and allows the size of the aerosol generation device to minimized by reducing unnecessary and/or wasted space.

According to another aspect, the air gap comprises a set of discrete air gap distance values.

According to another aspect, the air gap comprises a set of continuous air gap distance values.

The two preceding aspects are advantageous because they allow the air gap to be adapted to different geometric requirements of the aerosol generation device and/or the heating unit.

According to another aspect, the maximum air gap distance is equal to or smaller than 5 mm.

The latter aspect is advantageous because it provides an optimized compromise between optimized thermally insulating properties of the air gap, and a size of the aerosol generation device such that the aerosol generation device remains sufficiently comfortable to hold and use by a user.

According to another aspect, the minimum air gap distance is equal to or greater than 0.1 mm.

The latter aspect is advantageous because it provides an optimized compromise between an optimal size of the aerosol generation device that is comfortable to hold and use by a user, and thermally insulating properties of the air gap that are sufficient in preventing the outer surface of the device housing to become too hot.

According to another aspect, an average air gap distance between the main housing and the cover portion is between 0.1 and 5 mm.

The latter aspect is advantageous because it provides an optimized compromise between an average thermally insulating property of the air gap, and the overall size and shape of the aerosol generation device such that the aerosol generation device remains comfortable to hold and use by a user.

According to a another aspect, the air gap includes a first section of the air gap with a first average air gap distance and a second section of the air gap with a second average air gap distance different from the first air gap distance.

The latter aspect is advantageous because it allows two sections of the air gap to be adapted to two different sections of the aerosol generation device that require different thermally insulating properties.

According to another aspect, the cover element is provided with a thermally conductive element on at least a portion or all of its inner surface that faces the main housing when the cover element is releasably attached to the main housing.

The latter aspect is advantageous because the thermally conductive element allows heat to be distributed along the extension directions of the thermally conductive element. This affords a more uniform heating of the cover element and reduces the emergence of hot spots.

According to another aspect, in the preceding aspect the thermally conductive element comprises a thermally conductive strip, layer, rod, or bar.

The latter aspect is advantageous because a strip, layer, rod, or bar are cost-efficient during manufacture.

According to another aspect, in any one of the two preceding aspects, the thermally conductive element comprises a copper material.

The latter aspect is advantageous because copper provides optimal heat conducting properties and is cost-efficient.

According to another aspect, the aerosol generation device comprises a cover detection means for detecting whether the cover element is attached to the main housing or not.

The latter aspect is advantageous because it allows a determination of whether the cover element is properly attached to ensure the proper formation of the thermally insulating air gap as well as ensure safe operation and protection of the aerosol generation device.

According to another aspect in the preceding aspect, the cover detection means comprises a button or switch that is actuated when the cover element is attached to the main housing.

The latter aspect is advantageous because a button or switch can be cost-efficiently implemented for reliably and repeatedly detecting attachment of the cover element.

According to another aspect, in any one of the two preceding aspects, the cover detection means comprises sensor circuitry.

According to another aspect, in any one of the three preceding aspects, the sensor circuitry comprises a Hall sensor.

The two preceding aspects are advantageous because a magnetic sensor is less susceptible to mechanical wear and tear due to repeated attachment and detachment of the cover element as the actuation of a Hall sensor does not require a mechanical actuation of the sensor by, e.g., pressing onto the sensor or otherwise moving a part of the sensor.

According to another aspect in the preceding aspect, the cover element comprises or is a magnetic element that can be detected by the Hall sensor when the cover element is attached to the main housing.

The latter aspect is advantageous because it provides a dedicated detection target that can be detected by the Hall sensor to reliably detect whether the cover element is properly attached.

According to another aspect, in anyone of the three preceding aspects, the sensor circuitry comprises an optical sensor for detecting the detachable panel when the detachable panel is attached to the main housing of the main body.

The latter aspect is advantageous because an optical sensor is less susceptible to mechanical wear and tear due to repeated attachment and detachment of the cover element as the actuation of an optical sensor does not require a mechanical actuation of the sensor by, e.g., pressing onto the sensor or otherwise moving a part of the sensor.

According to another aspect in the preceding aspect, the optical sensor comprises an IR sensor for detecting a light-reflective element provided with the cover element that can be detected by the IR sensor.

The latter aspect is advantageous because an IR sensor requires low power and can reliably detect a detection target even in the presence of ambient or stray light.

According to another aspect, in any one of the five preceding aspects, the sensor circuitry comprises an electrical sensor.

The latter aspect is advantageous because an optical sensor is less susceptible to mechanical wear and tear due to repeated attachment and detachment of the cover element as the actuation of an electrical sensor does not require a mechanical actuation of the sensor by, e.g., pressing onto the sensor or otherwise moving a part of the sensor.

According to another aspect in the preceding aspect, the electrical sensor comprises a plurality of electrical contacting elements for contacting an electrically conductive element provided with the cover when the cover element is attached to the main housing such that a current can flow from one of the plurality of electrical contacting elements to another of the plurality of electrical contacting elements through the electrically conductive element.

The latter aspect is advantageous because it provides a reliable way of detecting whether the cover element is properly attached.

According to another aspect in any one of the seven ceding aspects, the sensor circuitry comprises an electrical connector and the cover element comprises a corresponding electrical counter-connector that engage with each other when the cover element is attached to the main housing of the main body.

According to another aspect in the preceding aspect, the electrical connector and the corresponding electrical counter-connector comprise a pogo pin and a pogo pin receptacle, or vice versa.

The two preceding aspects are advantageous because they respectively provide a reliable and mechanically stable mechanical and electrical connection for reliably detecting whether the cover element is properly attached.

According to another aspect, in any one of the ten preceding aspects, the aerosol generation device comprises circuitry for controlling the operation of the aerosol generation device based on information from the cover detection means, the information comprising information about a first state in which it is detected that the cover element is attached to the main housing and about a second state in which it is detected that the cover element is not attached to the main housing.

Proper positioning and attachment of the cover element are important for ensuring that a user may properly and safely operate the aerosol generation device, i.e. that the air gap is properly formed to prevent the outer surface of the cover element from becoming too hot. The latter aspect is therefore advantageous because it allows the operation of the aerosol generation device to be adapted based on whether the cover element is properly attached or not.

According to another aspect, in the preceding aspect, controlling the operation of the aerosol generation device based on information from the cover detection means comprises preventing or inhibiting generation of an aerosol by the aerosol generation device if the information from the cover detecting means indicates the second state, and enabling generation of an aerosol by the aerosol generation device if the information from the cover detecting means indicates the first state.

If the cover element is not detected as attached, proper and safe operation as well as proper formation of the air gap of the aerosol generation device cannot be ensured. The latter aspect is therefore advantageous because it prevents unsafe operation of the aerosol generation device.

According to another aspect, an operation interface portion is provided within the air gap on the surface of the portion of the main housing facing the cover element when the cover element is attached to the main housing.

The latter aspect is advantageous because it allows a user to interact with the aerosol generation device by inputting an operation or receiving information from the aerosol generation device. Furthermore, the cover elements provide protection for the operation interface portion from outside influences.

According to another aspect in the preceding aspect, the operation interface portion comprises an input element for receiving an operation input by a user.

The latter aspect is advantageous because it allows an input from a user to reliably received.

According to another aspect in the preceding aspect, the input element comprises a button or switch.

The latter aspect is advantageous because a button or switch can be cost-efficiently implemented for reliably and repeatedly receiving an input from a user.

According to another aspect, an output element is provided within the air gap on the surface of the portion of the main housing facing the cover element when the cover element is attached to the main housing for indicating an operation output of the aerosol generation device.

According to another aspect in the preceding aspect, the output element comprises an indicator light.

The two preceding aspects are advantageous because they respectively allow the aerosol generation device to provide output information such as feedback information to a user of the aerosol generation device.

According to another aspect, when the cover element is attached to the main housing, the cover element and the main housing form the exterior surface of the aerosol generation device that is smooth and uniform except at seams formed where the cover element and main housing are adjoined.

According to another aspect in the preceding aspect, when the cover element is attached to the main housing, the exterior surface of the cover element makes up between 10% and 60% of the total exterior surface of the aerosol generation device.

According to another aspect, the aerosol generation device is an electronic cigarette.

### BRIEF DESCRIPTION OF THE DRAWINGS

Figs. 1A and 1B respectively show schematic illustrations of a side-view and a top-view of an aerosol generation device with a cover element;
Figs. 2A and 2B respectively show schematic illustrations of top views of an aerosol generation device with an operation interface portion;
Figs. 3A, 3B, and 3C respectively show cross-sectional side views of aerosol generation devices with a cover element and an air gap, wherein the embodiment according to fig. shows a device which is fully in accordance with the present invention as defined in claim 1;
Figs. 4A, 4B, 4C, and 4D respectively show partial cross-sectional side views of aerosol generation devices with a cover element and an air gap.

### DETALED DESCRIPTION OF PREFERRED EMBODIMENTS

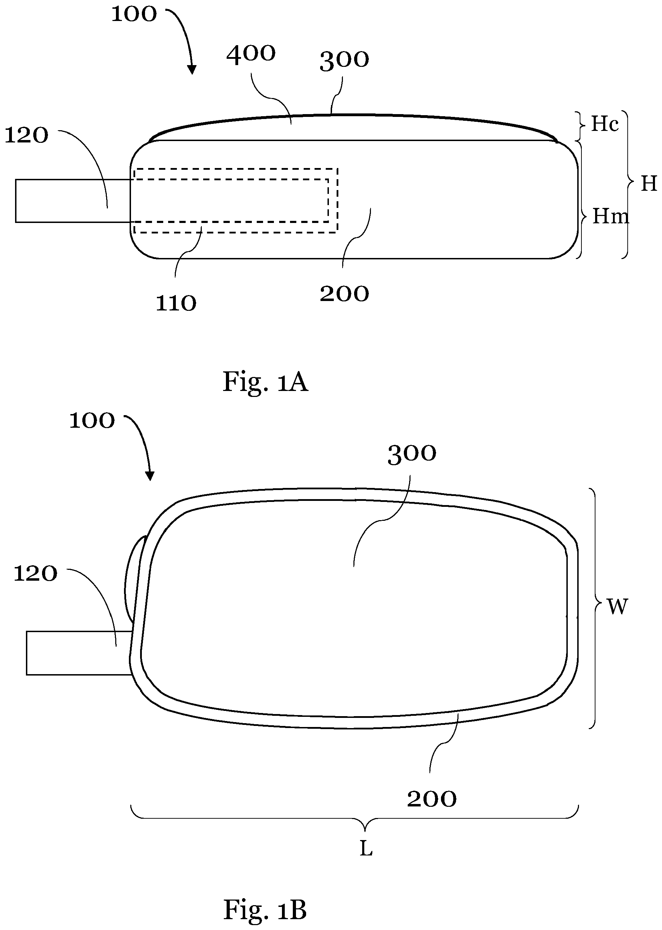

As shown in **Figs. 1A** and **1B****,** the aerosol generation device 100 comprises a main housing 200 and a cover element 300. The main housing 200 is configured to accommodate an aerosol generation unit for generating an aerosol for consumption by a user. The cover element 300 is detachably attached to the main housing 200. The cover element being detachable means that the cover element 300 is detachable from the main housing by a user of the aerosol generation device 100 without requiring any additional tools or aids, but can be detached by the user utilizing one or both hands. As an alternative, the cover element may not be detachable and may be integrally formed with the main housing or at least a portion of the main housing. The aerosol generation device 100 also comprises a power supply that may be a replaceable and/or rechargeable power supply, and may additionally be provided with a charging port for charging the rechargeable power supply. The power supply may preferably be a battery. The aerosol generation device 100 may have an elongated shape to improve the comfort of a user when holding the aerosol generation device 100. The longitudinal direction of the aerosol generation device 100 is the direction in which the aerosol generation device 100 is elongated. The extension of the aerosol generation device 100 in the longitudinal direction corresponds to the length L of the aerosol generation device 100, and the longitudinal direction of the aerosol generation device 100 corresponds to the length direction of the aerosol generation device 100. The aerosol generation device 100 has a transverse cross-section that lies in a transversal plane that is transverse to the longitudinal direction of the aerosol generation device 100. The transverse cross-section of the aerosol generation device 100 may in general be of any appropriate shape, but may preferably be of a rectangular, squared, circular, or elliptical shape. The longitudinal direction of the cross-section is a first transverse or radial direction of the aerosol generation device 100 and corresponds to the direction, in which the cross-section may be elongated. The extension of the cross-section in the first transverse or radial direction corresponds to the width W of the aerosol generation device 100, and the first transverse or radial direction of the aerosol generation device 100 corresponds to the width direction of the aerosol generation device 100. A direction perpendicular to the length direction and the width direction of the aerosol generation device 100 is a second transverse or radial direction of the aerosol generation device 100. The extension of the cross-section in the second transverse or radial direction corresponds to the height H of the aerosol generation device 100, and the second transverse or radial direction corresponds to the height direction of the aerosol generation device 100. In case of a circular cross-section, the width direction and height direction may be chosen at will as long as they are perpendicular to each other. In case of a squared cross-section, the width direction corresponds to the direct distance direction between two opposing sides of the square, and the height direction corresponds to the direction perpendicular to the width direction in the plane of the cross-section.

As shown in Fig. 1A, the cover element 300 is attached to the main housing 200 of the aerosol generation device 100 preferably from the height direction of the aerosol generation device 100, i.e. when attached to the main housing 200 of the aerosol generation device 100, the cover element 300 increases the height H of the aerosol generation device 100, but does not increase the length L and width W of the aerosol generation device 100, as show in Fig. 1B. The height H of the aerosol generation device 100 consists of the height He of the cover element 300 and the height Hm of the main housing 200, wherein the height He of the cover element 300 corresponds to difference between the height H of the aerosol generation device 100 and the height Hm of the main housing 200. Preferably, the height He of cover element 300 is less than 30% of the height H of the aerosol generation device 100. This ensures that, when the cover element 300 is attached, the overall size of the aerosol generation device 100 is such that the aerosol generation device 100 can be comfortably used, held, and operated by a user using a single hand. When the cover element 300 is attached to the main housing, the exterior surface of the cover element 300 is the surface of the cover element 300 that is opposite the inner surface of the cover element 300 that is the surface that faces the main housing 200. The exterior surface of the cover element 300 may preferably make up between 10% and 60%, preferably between 20% and 50%, more preferably between 30% and 40% of the total exterior surface of the aerosol generation device. When the cover element 300 is attached to the main housing 200, the exterior surface of the aerosol generation device 100 may be a smooth and uniform surface except for seams that are formed where the cover element 300 and the main housing 200 are adjoined. In particular, the exterior surface of the cover element 300 has a smooth and continuous shape, and the transition from the exterior surface of the cover element 300 to the exterior surface of the main housing 200 is smooth and continuous with the exception of a seam that is formed at the transition.

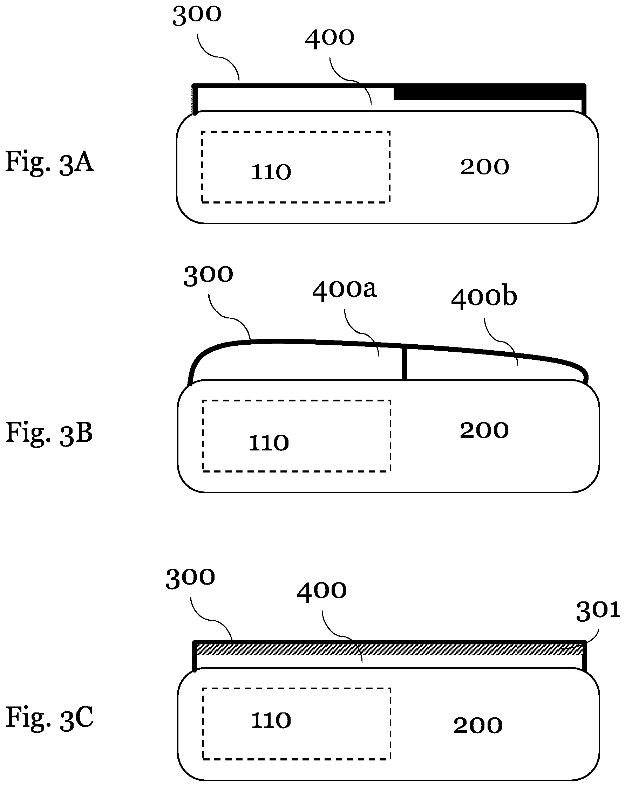

The aerosol generation unit accommodated within the main housing may comprise a heating unit 110 that is configured for heating a consumable 120 comprising an aerosol generation substrate. The aerosol generation device 100 may be an electronic cigarette and may be configured to generate an aerosol from an e-vapor or t-vapor aerosol generation substrate. For example, the heating unit 110 may comprise a receptacle configured for receiving a tobacco stick or similar consumable 120, and a heating element may be configured for heating the receptable and the tobacco stick received in the receptacle. Alternatively, the receptable may be configured for receiving a cartridge containing an aerosol generation substrate such as a liquid, and the heating unit 110 may comprise a wicking element and a heating element configured for heating the wicking element. Depending on the aerosol generation substrate, the heating unit may heat the aerosol generation substrate to temperatures up to 350°C for generating an aerosol. A portion of the heat generated by the heating unit 110 is transferred to the aerosol generation substrate for generating an aerosol and to the flow of air that transports the generated aerosol to a user during inhalation. However, a remaining and substantial portion of the generated heat is dissipated over time through heat conduction and heat radiation to the outer surface of the aerosol generation device and subsequently to the ambient air. Since this heat does not serve to heat the aerosol generation substrate, this heat corresponds to lost heat that is lost to the surrounding of the heating unit 110 that subsequently dissipates to the ambient air outside the aerosol generation device 100. An air gap 400 is provided between the cover element 300 and the main housing 200 to function as an thermally insulating element. The air gap 400 decreases the speed of heat dissipation of the lost heat that dissipates from the heating unit to the main housing through the air gap 400 to the cover element 300 and finally to the ambient air. By decreasing the speed of heat dissipation, the maximum temperature to which outer surface of the cover element 300 is heated due to dissipation of the lost heat is reduced. As a consequence, the outer surface of the cover element 300 is prevented from becoming too hot to touch or hold by the user, and injuries to the user can be prevented. The entire air gap 400 is preferably arranged between the main housing 200 and the cover element 300. The air gap 400 may be enclosed by the main housing 200 and the cover element 300. To aid in dissipating the lost heat, the cover element 300 may be provided with heat dissipation perforations that allow hot air from within the air gap 400 to dissipate to the outside of the cover element 300 and the aerosol generation device 100. The air gap 400 formed by and between the main housing 200 and the cover element 300 will be described in more detail in the context of Figs. 3A to 3C.

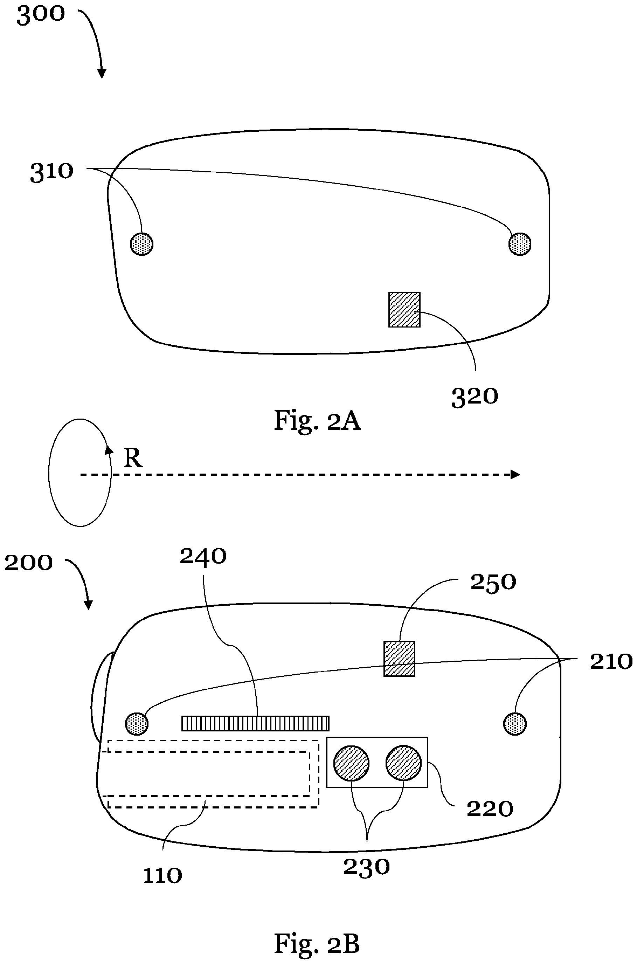

As shown in **Fig. 2A** illustrating the interior surface of a cover element 300 that is detached from a main housing 200 illustrated in **Fig. 2B** by a rotation of 180° around a rotation axis R, the main housing 200 and/or the cover element 300 may be provided with attaching means 210 and 310 for detachably attaching the cover element 300 to the main housing 200. The attaching means 210 may comprise means such as a press-fit connection, clamping connection or similar connection. Additionally, or alternatively, the attaching means may comprise magnetic means. The main housing 200 may be provided with a magnetic coupling element, and the cover element 300 may be provided with a magnetic counter-coupling element, wherein the coupling element and the counter-coupling element comprise a magnet and a ferromagnetic element. The main housing 200 is provided with an operation interface portion 220 that is accessible at the exterior surface of the main housing 200. The operation interface portion 220 comprises one or more operation input elements 230 that can be actuated for providing an input for operating the aerosol generation device 100. At least a portion or all of the operation interface portion 220 that comprises one or more operation input elements 230 are covered by the cover element 300 when the cover element 300 is attached to the main housing 200, i.e. the operation interface portion comprises one or more operation input elements 230 that are arranged between the main housing 200 and the cover element 300. Preferably, all operation input elements 230 are arranged between the main housing 200 and the cover element 300. Alternatively, one or more operation input elements 230 may be arranged at the exterior surface of the main housing 200 that is not covered by the cover element 300 and may thus be accessible and visible to the outside of the aerosol generation device 100. Additionally, the main housing 200 may be provided with a plurality of operation interface portions 220 of which at least a portion or all may be arranged between the main housing 200 and the cover element 300 to be covered by the cover element 300.

Operation input elements 230 of the portion of the operation interface portion that is covered by the cover element 300 may be rendered invisible to the outside of the aerosol generation device 100. This may be achieved if the operation input elements are enclosed between the main housing 200 and the cover element 300 without a line of sight to the operation input elements 230 from outside of the aerosol generation device 100. Additionally, the cover element 300 may preferably be at least partially of fully opaque, or translucent to the extent that operation input elements 230 enclosed between the main housing 200 and the cover element 300 are not visible through the cover element 300. The one or more operation input elements comprise input elements that, when actuated, may cause one of the following: turn the aerosol generation device 100 on/off, change and/or set a heating temperature and/or heating duration of a heating unit 110 provided with the aerosol generation device 100, check an amount of consumable 120 remaining, check an amount of power remaining in the power supply.

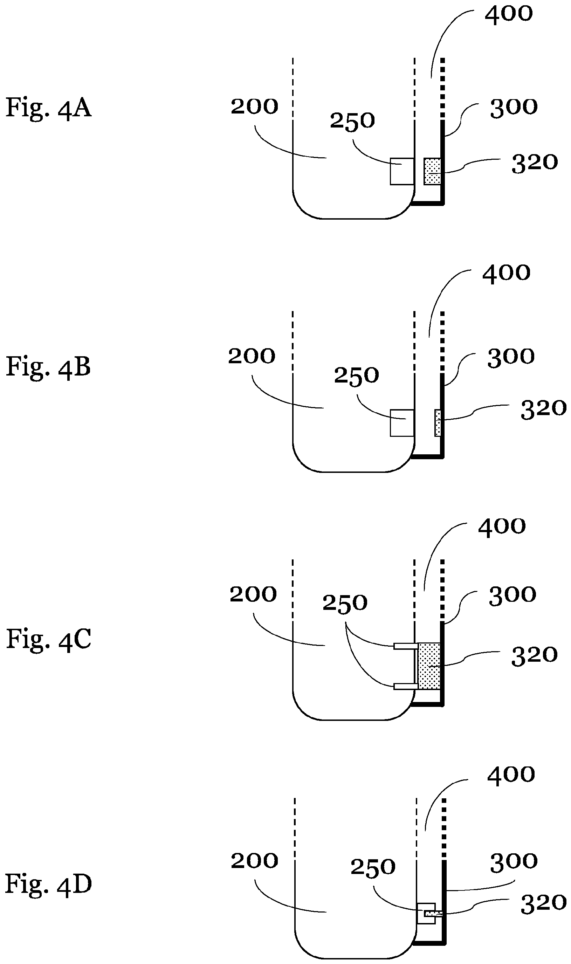

The aerosol generation device 100 may further be provided with an operation output element 240. The operation output element 240 may comprise a light indicator such as one or more LED light sources or an LED light strip. The light indicator may indicate information indicating an operational state to a user of the aerosol generation device 100, the information comprising, but not limited to information relating to an on/off state of the aerosol generation device 100, information relating a heating temperature of the aerosol generation device 100, information relating to a consumable 120 in use with the aerosol generation device 100, information relating to a state of the power source of the aerosol generation device 100. The light indicator may be arranged between the main housing 200 and the cover element 300, or may alternatively be arranged at the exterior surface of the main housing 200 and not be covered by the cover element 300. The light indicator 240 may be configured to be visible and/or emit light when the cover element 300 is detached from the main housing. In case the light indicator 240 is arranged between the main housing 200 and the cover element 300, the cover element may be configured to be at least partially translucent such that the light indicator 240 is visible through the cover element 300 when the light indicator 240 is emitting light, and is not visible through the cover element 300 when the light indicator 240 is not emitting light. Additionally, or alternatively, the cover element 300 may be provided with a plurality of light-permeable perforations through which the light indicator 240 is visible to the outside of the aerosol generation device 100 when the light indicator 240 is emitting light. The plurality of light-permeable perforations may be configured and sized such that the light indicator is not visible through the plurality of perforations when the light indicator 240 is not emitting light. The plurality of light-permeable perforations may at least partially correspond to the heat dissipating perforations described above. The aerosol generation device 100 may be provided with a cover detection means 250 that is configured for detecting whether the cover element 300 is attached to the main housing 200, as will be detailed below for embodiments described in the context of Figs. 4A to 4D.

As shown in **Figs. 3A, 3B,** and **3C****,** the cover element 300 may preferably be shaped as a panel. The cover element 300 may be substantially plate-shaped wherein the average thickness of the cover element 300 is less than 30% of the height He of the cover element 300 as described for embodiments in the context of Fig. 1A. The cover element 300 may preferably have a central portion that is substantially planar, and one or more peripheral or circumferential portions that are curved or bent to allow the cover element 300 to be adjoined to the main housing 200 with a space arranged or enclosed between the main housing 200 and the cover element 300 within which one or more operation input elements 230 may be arranged. Alternatively, the cover element 300 may have a continuously curved shape with a central portion having a curvature that is smaller than the curvature of one or more peripheral or circumferential portions.

The air gap 400 is formed between the main housing 200 and the cover element 300. In particular, the dimensions and the shape of the air gap 400 are defined by the shape of the cover element 300 and the main housing 200. The aerosol generation unit 110 that may preferably be a heating unit 110 accommodated within the main housing 200 is typically sized such that its extension in a length direction (shown in Figs. 3A to 3C) and/or width direction (not shown) as described in the context of Figs. 1A and 1B is smaller than the extensions in the length direction and/or the width direction of the main housing 200 and/or the cover element 300. Therefore, different sections of the main housing covered by the cover element 300 are heated to different temperatures by the lost heat from the heating unit 110, and, as a consequence, different sections of the cover element 300 are heated to different temperatures by the heat dissipating through the air gap 400 from the main housing 200. Since sections arranged in closer proximity to the heating unit 110 are typically heated more strongly than sections arranged further away from the heating unit 110, different sections of the cover element 300 may be differently thermally insulated.

To optimize the thermally insulating properties of the air gap 400, a least a section or the entire air gap is formed adjacent to a section of the portion of the main housing of which at least a part is adjacent to the heating unit. Preferably, the air gap is formed adjacent to the entire section of the main housing that is entirely adjacent to the heating unit. Additionally, the air gap 400 is formed between the entire cover element 300 and the entire section of the main housing 200 that is covered by the cover element 300 except for where the cover element 300 is adjoined with the main housing 200 for attaching the cover element 300 to the main housing 200 to maximize the air gap 400. Additionally, the air gap 400 may comprise different air gap sections, and different sections may have different air gap distances and different average air gap distances. It should be noted that when the cover element 300 is attached to the main housing 200 from a height direction as described in the context of Figs. 1A and 1B, a gap distance corresponds to a distance between the main housing 200 and the cover element 300 in the height direction.

As shown in Fig. 3A, the air gap 400 may comprise more than one air gap section. The air gap may comprise a set of discrete air gap distances, and different gap sections may have different discrete gap distances. Additionally, or alternatively, as shown in Fig. 3B, the air gap may comprise a continuous spectrum of air gap distances. For achieving different air gap sections with different air gap distances, the cover element 300 may have a stepped and/or curved cross-sectional shape. It should be noted that the cover element in general may have any suitable cross-sectional shape. Additionally, or alternatively, the cover element 300 may comprises different thicknesses, wherein the cover element 300 may comprises a discrete set of different thicknesses and/or a continuous spectrum of different thicknesses. As a result, due to the shape and/or thickness(es), some sections of the cover element 300 are arranged closer to the heating unit 110 and the main housing 200, and some sections of the cover element 300 are arranged further away from the heating unit 110 and the main housing 200 to respectively form smaller and larger air gap distances. Additionally, as shown in Fig. 3B, different sections of the air gap 400 may not be in communication with each other. The cover element 300 may be configured to separate the gap 400 into one or more gap sections 400a, 400b that may not be in communication with each other. As a further advantage, such a cover element 300 may have increased strength and robustness.

To further optimize the thermally insulating properties of the air gap 400, sections of the air gap 400 that are arranged closer to the heating unit 110 may have an average gap distance that is larger than the average gap distance of sections of the air gap 400 that are arranged further away from the heating unit 110. Preferably, sections that are arranged closer to the heating unit no correspond to sections of the air gap that are arranged entirely adjacent to a section of the portion of the main housing 200 covered by the cover element 300, the covered portion of the main housing 200 being entirely adjacent the heating unit 110. Sections that are arranged further away from the heating unit 110 may preferably correspond to sections of the air gap 400 that are arranged not adjacent a section of the portion of the main housing 200 covered by the cover element 300, the section of the covered portion of the main housing 200 being entirely adjacent the heating unit 110. To prevent the size of the aerosol generation device 100 from becoming sized such that the aerosol generation device cannot be comfortable held and used by a user, the maximum air gap distance may be equal to or smaller than 5 mm. Additionally, or alternatively, to ensure suitable and sufficient thermally insulating properties of the air gap 400, the minimum air gap distance may be equal to or greater than 0.1 mm. Additionally, or alternatively, the average air gap distance may be between 0.1 and 5 mm.

As shown in Fig. 3C, the cover element 300 may be provided with a thermally conductive element 301 on only a portion or preferably all of the inner surface of the cover element 300 that faces the portion of the main housing 200 that is covered by the cover element 300. At least, the thermally conductive element extends from a section of the cover element 300 that is arranged closer the heating unit 110 to a section of the cover element 300 that is arranged further away from the heating unit 110. The thermally conductive element 301 allows heat from a section of the cover element 300 that is more strongly heated by the lost heat from the heating unit 100 to be transferred to a section of the cover element 300 that less strongly heated by the lost heat. This allows the cover element 300 to be more uniformly heated by the lost heat and prevents hot spots or hot sections on the cover element 300. Preferably, the thermally conductive element is shaped like a strip, layer, rod or bar that may comprise or substantially consist of copper or a material with similar thermal conductance properties. The cover element 300 may be provided with a plurality of thermally conductive elements 301 to improve the uniform heating and heat dissipation of the cover element 300.

It should be noted that the cover element 300 and the main housing 200 may be formed of a same material, or the cover element 300 may be formed of a different material than the main housing 200. In particular, the cover element may be formed of or comprise a material that provides thermally insulating properties in addition to the thermally insulating properties of the air gap 400 to further prevent the surface of the cover element 300 to become too hot to touch or hold by a user. For this purpose, the cover element 300 may comprise or substantially consist of one or more layers of aerogel sheets, thermal insulating sheets, and foamed sheets, preferably foamed resin sheets, and/or foamed plastic. Additionally, or alternatively, the cover element 300 may be provided on a portion or all of its inner surface with one or more layers of aerogel sheets, thermal insulating sheets, and foamed sheets, preferably foamed resin sheets, and/or foamed plastic.

As shown in **Figs. 4A to 4D****,** the aerosol generation device 100 may be provided with a cover detection means 250 that is configured for detecting whether the cover element 300 is properly and securely attached to the main housing 200 to ensure proper formation of the air gap 400. The cover element 300 may be provided with a detection object 320 that is configured to be detected by the cover detection means 250 when the cover element 300 is attached to the main housing 200. The aerosol generation device 100 may further be provided with circuitry for controlling the operation of the aerosol generation device 100. The circuitry may be configured to control the operation of the aerosol generation device 100 based on information provided by the cover detection means 250. The information from the cover detection means 250 comprises information about a first state in which it is detected that the cover element 300 is attached to the main housing 200, and about a second state in which it is detected that the cover element 300 is not attached to the main housing 200. To ensure safe operation of the aerosol generation device 100, the circuitry may be configured to prevent or inhibit generation of an aerosol by the aerosol generation device 100. This may for example be achieved by preventing operation of a heating unit 110 for heating an aerosol generation substrate and/or by limiting operation of the heating unit 110 to a limited time duration or a limited temperature range. As shown in Fig. 4A, the cover detection means 250 may comprise a magnetic sensor such as a Hall sensor, and the cover element 300 may be provided with a magnetic detection object 320 such as ferromagnetic object that can be detected when the cover element 300 is attached to the main housing 200. Additionally, or alternatively, the cover element 300 may comprise or substantially consist of a ferromagnetic material that can be detected by the magnetic sensor. A first state in which the cover element 300 is properly and securely attached to the aerosol generation device 100 may be indicated when a detection signal generated in the magnetic sensor based on a distance between the magnetic sensor and the magnetic detection object is above a predetermined detection signal strength threshold, and a second state in which the cover element 300 is not properly and securely attached is indicated when the detection signal strength is below the predetermined threshold. Alternatively, the first state may be indicated when a detection signal is generated, and a second state is indicated when no detection signal strength is indicated. Additionally, or alternatively, as shown in Fig. 4B, the cover detection means 250 may comprise an optical sensor, and the cover element 300 may be provided with an optical detection object 320 such as a light reflective object that reflects light. The optical sensor may be an IR sensor that emits IR light. A first state may be indicated when the IR light emitted by the IR sensor is reflected back to the IR sensor to be detected by the IR sensor by the light reflective object when the cover element 300 is properly and securely attached to the main housing 200. A first state may additionally, or alternatively, be indicated when the reflected IR light that is detected by the IR sensor is above a predetermined intensity or coherence threshold. A second state may be indicated when the IR light emitted by the IR sensor is not reflected by the light reflective object 320 when the cover element 300 is not properly or securely attached to the main housing 200. A second state may additionally, or alternatively, be indicated when a reflected IR light that is detected by the IR sensor is below a predetermined intensity or coherence threshold. Additionally, or alternatively, as shown in Fig. 4C, the cover detection means may comprise an electrical sensor, and the cover element 300 may be provided with an electrical detection object. For example, the cover detection means may comprise an open electrical circuit with a plurality of electrical contacts that are exposed at the main housing 200 towards the cover element 300, and the cover element 300 may be provided with an electrically conductive element 320. The plurality of electrical contacts may comprise electrical connectors such as pogo pins and/or pogo pin receptacles, and the electrically conductive element 320 may comprise one or more corresponding pogo pin receptacles and/or pogo ins. A first state may be indicated when the plurality of contacts of the open electrical circuit are in contact with the electrically conductive element 320 of the cover element such that the open circuit is closed, and consequently a current flow or voltage drop can be detected. A first state may additionally, or alternatively be indicated, when the electrical detection object 320 has a resistance with a predetermined value or within a predetermined value range, and consequently the detected current or voltage drop has a predetermined value or is within a predetermined value range. As shown in Fig. 4D, the cover detection means 250 may additionally, or alternatively, comprise a button or switch, and the cover element 300 maybe provided detection object 320 such as a protrusion or similar structure for actuating the button or switch. The button or switch may be a mechanical and/or a capacitive touch button or switch. A first state may be indicated when the button or switch is actuated when the cover element 300 is properly and securely attached to the main housing, and a second state may be indicated when the button or switch is not actuated.

It should be noted that that cover detection means 250 may also function as an attaching means 210 for attaching the cover element 300 to the main housing 200. For example, the cover detection means 250 may comprise a magnetic sensor that exerts an attractive force onto a cover element 300 that comprises or is provided with a magnetic element. As another example, the cover detection means 250 may comprises a button or switch, and the cover element 300 may be mechanically attached or linked to the button or switch to attach the cover element 300 to the main housing 200. The mechanical attachment or linkage may be achieved via a mechanical press-fit connection or similar clamping or engaging configuration. As yet another example, the cover detection means 250 may comprise a plurality of electrical contacting elements such as pogo pins or pogo pin receptacles, and the cover element 300 may be provided with an electrically conductive element such as one or more pogo pins or pogo pin receptacles that engage with the electrical contacting elements of the cover detection means 250 to form a stable mechanical connections for attaching the cover element 300 to the main housing 200.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the independent and dependent claims.

### LIST OF REFERENCE SIGNS USED

- 100: aerosol generation device
- 110: heating unit
- 120: consumable
- 200: main housing
- 210: attaching means
- 220: operation interface portion
- 230: operation input element
- 240: output element
- 250: cover detection means
- 300: cover element
- 301: thermally conductive element
- 310: attaching means
- 320: detection object
- 400: air gap
- 400a/400b: air gap sections
- H: height of the aerosol generation device
- L: length of the aerosol generation device
- W: width of the aerosol generation device
- He: height of the cover element

## Claims

1. An aerosol generation device (100) comprising:
a main body defined by a main housing (200) comprising a heating unit (110) for heating an aerosol generation substrate and accommodated within the main housing (200);
a cover element (300) that is detachably attached or connected to the main housing (200) and covers a portion of the main housing (200) to form part of the exterior surface of the main housing (200):
wherein the main housing (200) and the cover element (300) are shaped such that an air gap (400) is formed between the main housing (200) and the cover element (300),
***characterized in that*** **in that** the cover elemen (300) comprises a discrete set of different thicknesses and/or a continuous spectrum of different thicknesses, in a way such that some sections of the cover element (300) that are arranged closer to the heating unit (110) and the main housing (200) have a larger air gap (400) distance between the cover element (300) and the heating unit (110), and some sections of the cover elemen (300) that are arranged further away from the heating unit (110) and the main housing (200) have a smaller air gap (400) distance between the cover element (300) and the heating unit (110).

2. The aerosol generation device (100) according the preceding claim, wherein the entire cover element (300) covers a portion of the main housing (200), and wherein the air gap (400) is formed between the portion of the main housing (200) covered by the cover element (300) and the cover element (300).

3. The aerosol generation device (100) according to any one of the preceding claims,
wherein the air gap (400) is enclosed between the main housing (200) and the cover element (300).

4. The aerosol generation device (100) according to any one of the preceding claims,
wherein a section or the entire air gap (400) is formed adjacent to a section of the portion of the main housing (200) of which at least a part is adjacent to the heating unit (110), or
wherein a section of or the entire air gap (400) is formed adjacent to a section of the main housing (200) of which the entire section is adjacent to the heating unit (110).

5. The aerosol generation device (100) according to any one of the preceding claims,
wherein different sections of the air gap (400) have different average gap distances.

6. The aerosol generation device (100) according to any one of the preceding claims,
wherein an average air gap distance between the main housing (200) and the cover portion (300) is between 0.1 and 5 mm.

7. The aerosol generation device (100) according to any one of the preceding claims, wherein the air gap (400) includes a first section of the air gap (400) with a first average air gap distance and a second section of the air gap (400) with a second average air gap distance different from the first air gap distance.

8. The aerosol generation device (100) according to any one of the preceding claims, wherein the cover element (300) is provided with a thermally conductive element (301) on at least a portion or all of its inner surface that faces the main housing (200) when the cover element (300) is releasably attached to the main housing (200).

9. The aerosol generation device (100) according to the preceding claim, wherein the thermally conductive element (301) comprises a thermally conductive strip, layer, rod, or bar, wherein the thermally conductive element (301) comprises a copper material.

10. The aerosol generation device (100) according to any one of the preceding claims, comprising a cover detection means (250) for detecting whether the cover element (300) is attached to the main housing (200) or not.

11. The aerosol generation device (100) according to claim 10, wherein the cover detection means (250) comprises a button or switch that is actuated when the cover element (300) is attached to the main housing (200), and/or wherein the cover detection means (250) comprises sensor circuitry.

12. The aerosol generation device (100) according to claim 11, wherein the sensor circuitry comprises a Hall sensor, and/or
wherein the cover element (300) comprises or is a magnetic element that can be detected by the Hall sensor when the cover element (300) is attached to the main housing (200),
and/or
wherein the sensor circuitry comprises an optical sensor for detecting the cover element (300) in the form of a detachable panel when the detachable panel is attached to the main housing (200) of the main body, and/or
wherein the sensor circuitry comprises an electrical sensor that comprises a plurality of electrical contacting elements for contacting an electrically conductive element provided with the cover when the cover element (300) is attached to the main housing (200) such that a current can flow from one of the plurality of electrical contacting elements to another of the plurality of electrical contacting elements through the electrically conductive element.

13. The aerosol generation device (100) according to any one of claims 11 to 12, comprising circuitry for controlling the operation of the aerosol generation device (100) based on information from the cover detection means (250), the information comprising information about a first state in which it is detected that the cover element (300) is attached to the main housing (200) and about a second state in which it is detected that the cover element (300) is not attached to the main housing (200),
wherein controlling the operation of the aerosol generation device (100) 2. based on information from the cover detection means (250) comprises preventing or inhibiting generation of an aerosol by the aerosol generation device (100) if the information from the cover detecting means (250) indicates the second state, and enabling generation of an aerosol by the aerosol generation device (100) if the information from the cover detecting means (250) indicates the first state.

14. The aerosol generation device (100) according to any one of the preceding claims,
wherein an operation interface portion (220) is provided within the air gap (400) on the surface of the portion of the main housing (200) facing the cover element (300) when the cover element (300) is attached to the main housing (200),
wherein the operation interface portion (220) comprises an input element (230) for receiving an operation input by a user.

15. The aerosol generation device (100) according to any one the preceding claims,
wherein an output element (240) is provided within the air gap (400) on the surface of the portion of the main housing (200) facing the cover element (300) when the cover element (300) is attached to the main housing (200) for indicating an operation output of the aerosol generation device (100),
wherein the output element (240) comprises an indicator light.

## Patentansprüche

1. Aerosolerzeugungsvorrichtung (100), umfassend:
einen Hauptkörper, der durch ein Hauptgehäuse (200) definiert ist, umfassend eine Heizeinheit (110) zum Erwärmen eines Aerosolerzeugungssubstrats und innerhalb des Hauptgehäuses (200) untergebracht;
ein Abdeckelement (300), das abnehmbar an dem Hauptgehäuse (200) angebracht oder damit verbunden ist und einen Anteil des Hauptgehäuses (200) abdeckt, um einen Teil der Außenfläche des Hauptgehäuses (200) zu bilden;
wobei das Hauptgehäuse (200) und das Abdeckelement (300) so geformt sind, dass ein Luftspalt (400) zwischen dem Hauptgehäuse (200) und dem Abdeckelement (300) gebildet wird,
**dadurch gekennzeichnet, dass** das Abdeckelement (300) einen diskreten Satz unterschiedlicher Dicken und/oder ein kontinuierliches Spektrum unterschiedlicher Dicken umfasst, sodass einige Abschnitte des Abdeckelements (300), die näher an der Heizeinheit (110) und dem Hauptgehäuse (200) angeordnet sind, einen größeren Luftspalt (400)-Abstand zwischen dem Abdeckelement (300) und der Heizeinheit (110) aufweisen, und einige Abschnitte des Abdeckelements (300), die weiter entfernt von der Heizeinheit (110) und dem Hauptgehäuse (200) angeordnet sind, einen kleineren Luftspalt (400)-Abstand zwischen dem Abdeckelement (300) und der Heizeinheit (110) aufweisen.

2. Aerosolerzeugungsvorrichtung (100) nach dem vorhergehenden Anspruch, wobei das gesamte Abdeckelement (300) einen Anteil des Hauptgehäuses (200) abdeckt, und wobei der Luftspalt (400) zwischen dem durch das Abdeckelement (300) abgedeckten Anteil des Hauptgehäuses (200) und dem Abdeckelement (300) gebildet wird.

3. Aerosolerzeugungsvorrichtung (100) nach einem der vorhergehenden Ansprüche, wobei der Luftspalt (400) zwischen dem Hauptgehäuse (200) und dem Abdeckelement (300) eingeschlossen ist.

4. Aerosolerzeugungsvorrichtung (100) nach einem der vorhergehenden Ansprüche,
wobei ein Abschnitt oder der gesamte Luftspalt (400) angrenzend an einen Abschnitt des Anteils des Hauptgehäuses (200) gebildet wird, von dem mindestens ein Teil an die Heizeinheit (110) angrenzt, oder
wobei ein Abschnitt oder der gesamte Luftspalt (400) angrenzend an einen Abschnitt des Hauptgehäuses (200) gebildet wird, von dem der gesamte Abschnitt an die Heizeinheit (110) angrenzt.

5. Aerosolerzeugungsvorrichtung (100) nach einem der vorhergehenden Ansprüche, wobei unterschiedliche Abschnitte des Luftspalts (400) unterschiedliche durchschnittliche Spaltabstände aufweisen.

6. Aerosolerzeugungsvorrichtung (100) nach einem der vorhergehenden Ansprüche, wobei ein durchschnittlicher Luftspaltabstand zwischen dem Hauptgehäuse (200) und dem Abdeckanteil (300) zwischen 0,1 und 5 mm beträgt.

7. Aerosolerzeugungsvorrichtung (100) nach einem der vorhergehenden Ansprüche, wobei der Luftspalt (400) einen ersten Abschnitt des Luftspalts (400) mit einem ersten durchschnittlichen Luftspaltabstand und einen zweiten Abschnitt des Luftspalts (400) mit einem zweiten durchschnittlichen Luftspaltabstand, der sich von dem ersten Luftspaltabstand unterscheidet, beinhaltet.

8. Aerosolerzeugungsvorrichtung (100) nach einem der vorhergehenden Ansprüche, wobei das Abdeckelement (300) mit einem wärmeleitfähigen Element (301) auf mindestens einem Anteil oder der gesamten Innenfläche davon, die dem Hauptgehäuse (200) zugewandt ist, wenn das Abdeckelement (300) lösbar an dem Hauptgehäuse (200) angebracht ist, versehen ist.

9. Aerosolerzeugungsvorrichtung (100) nach dem vorhergehenden Anspruch, wobei das wärmeleitfähige Element (301) einen wärmeleitfähigen Streifen, eine wärmeleitfähige Schicht, einen wärmeleitfähigen Stab oder eine wärmeleitfähige Stange umfasst, wobei das wärmeleitfähige Element (301) ein Kupfermaterial umfasst.

10. Aerosolerzeugungsvorrichtung (100) nach einem der vorhergehenden Ansprüche, umfassend ein Abdeckungserfassungsmittel (250) zum Erfassen, ob das Abdeckelement (300) an dem Hauptgehäuse (200) angebracht ist oder nicht.

11. Aerosolerzeugungsvorrichtung (100) nach Anspruch 10, wobei das Abdeckungserfassungsmittel (250) einen Knopf oder Schalter umfasst, der betätigt wird, wenn das Abdeckelement (300) an dem Hauptgehäuse (200) angebracht ist, und/oder wobei das Abdeckungserfassungsmittel (250) eine Sensorschaltung umfasst.

12. Aerosolerzeugungsvorrichtung (100) nach Anspruch 11, wobei die Sensorschaltung einen Hall-Sensor umfasst, und/oder
wobei das Abdeckelement (300) ein magnetisches Element umfasst oder ein magnetisches Element ist, das durch den Hall-Sensor erfasst werden kann, wenn das Abdeckelement (300) an dem Hauptgehäuse (200) angebracht ist, und/oder
wobei die Sensorschaltung einen optischen Sensor zum Erfassen des Abdeckelements (300) in Form einer abnehmbaren Platte umfasst, wenn die abnehmbare Platte an dem Hauptgehäuse (200) des Hauptkörpers angebracht ist, und/oder
wobei die Sensorschaltung einen elektrischen Sensor umfasst, der eine Vielzahl von elektrischen Kontaktelementen zum Kontaktieren eines elektrisch leitfähigen Elements, das mit der Abdeckung versehen ist, wenn das Abdeckelement (300) an dem Hauptgehäuse (200) angebracht ist, umfasst, sodass ein Strom von einem der Vielzahl von elektrischen Kontaktelementen zu einem anderen der Vielzahl von elektrischen Kontaktelementen durch das elektrisch leitfähige Element fließen kann.

13. Aerosolerzeugungsvorrichtung (100) nach einem der Ansprüche 11 bis 12, umfassend eine Schaltung zum Steuern des Betriebs der Aerosolerzeugungsvorrichtung (100) basierend auf Information von dem Abdeckungserfassungsmittel (250), wobei die Information Information über einen ersten Zustand, in dem erfasst wird, dass das Abdeckelement (300) an dem Hauptgehäuse (200) angebracht ist, und über einen zweiten Zustand, in dem erfasst wird, dass das Abdeckelement (300) nicht an dem Hauptgehäuse (200) angebracht ist, umfasst,
wobei Steuern des Betriebs der Aerosolerzeugungsvorrichtung (100) basierend auf Information von dem Abdeckungserfassungsmittel (250) Verhindern oder Hemmen der Erzeugung eines Aerosols durch die Aerosolerzeugungsvorrichtung (100), wenn die Information von dem Abdeckungserfassungsmittel (250) den zweiten Zustand anzeigt, und das Ermöglichen der Erzeugung eines Aerosols durch die Aerosolerzeugungsvorrichtung (100), wenn die Information von dem Abdeckungserfassungsmittel (250) den ersten Zustand anzeigt, umfasst.

14. Aerosolerzeugungsvorrichtung (100) nach einem der vorhergehenden Ansprüche, wobei ein Betriebsschnittstellenanteil (220) innerhalb des Luftspalts (400) auf der Oberfläche des Anteils des Hauptgehäuses (200), der dem Abdeckelement (300) zugewandt ist, wenn das Abdeckelement (300) an dem Hauptgehäuse (200) angebracht ist, vorgesehen ist,
wobei der Betriebsschnittstellenanteil (220) ein Eingabeelement (230) zum Empfangen einer Betriebseingabe durch einen Benutzer umfasst.

15. Aerosolerzeugungsvorrichtung (100) nach einem der vorhergehenden Ansprüche, wobei ein Ausgabeelement (240) innerhalb des Luftspalts (400) auf der Oberfläche des Anteils des Hauptgehäuses (200), der dem Abdeckelement (300) zugewandt ist, wenn das Abdeckelement (300) an dem Hauptgehäuse (200) angebracht ist, zum Anzeigen einer Betriebsausgabe der Aerosolerzeugungsvorrichtung (100) vorgesehen ist, wobei das Ausgabeelement (240) eine Anzeigeleuchte umfasst.

## Revendications

1. Un dispositif de génération d'aérosol (100) comprenant :
un corps principal défini par un boîtier principal (200) comprenant une unité de chauffage (110) destinée à chauffer un substrat de génération d'aérosol et qui est logée à l'intérieur du boîtier principal (200) ;
un élément de couvercle (300) qui est rattaché ou relié de façon détachable au boîtier principal (200) et qui recouvre une partie du boîtier principal (200) pour former une fraction de la surface extérieure du boîtier principal (200) ;
dans lequel le boîtier principal (200) et l'élément de couvercle (300) sont conformés de manière à former un intervalle d'air (400) entre le boîtier principal (200) et l'élément de couvercle (300),
**caractérisé en ce que** l'élément de couvercle (300) présente une série discrète d'épaisseurs différentes et/ou un spectre continu d'épaisseurs différentes, de telle manière que certaines sections de l'élément de couvercle (300) qui sont agencées plus près de l'unité de chauffage (110) et du boîtier principal (200) aient une plus grande distance d'intervalle d'air (400) entre l'élément de couvercle (300) et l'unité de chauffage (110), et que certaines sections de l'élément de couvercle (300) qui sont agencées plus loin de l'unité de chauffage (110) et du boîtier principal (200) aient une plus faible distance d'intervalle d'air (400) entre l'élément de couvercle (300) et l'unité de chauffage (110) .

2. Le dispositif de génération d'aérosol (100) selon la revendication précédente, dans lequel la totalité de l'élément de couvercle (300) couvre une partie du boîtier principal (200), et dans lequel l'intervalle d'air (400) est formé entre la partie du boîtier principal (200) couverte par l'élément de couvercle (300) et l'élément de couvercle (300).

3. Le dispositif de génération d'aérosol (100) selon l'une des revendications précédentes,
dans lequel l'intervalle d'air (400) est enfermé entre le boîtier principal (200) et l'élément de couvercle (300).

4. Le dispositif de génération d'aérosol (100) selon l'une des revendications précédentes,
dans lequel une section ou bien la totalité de l'intervalle d'air (400) est formée adjacente à une section de la partie du boîtier principal (200) dont au moins une fraction est adjacente à l'unité de chauffage (110), ou
dans lequel une section ou bien la totalité de l'intervalle d'air (400) est formée adjacente à une section du boîtier principal (200) dont la totalité de la section est adjacente à l'unité de chauffage (110).

5. Le dispositif de génération d'aérosol (100) selon l'une des revendications précédentes, dans lequel des sections différentes de l'intervalle d'air (400) présentent des distances moyennes d'intervalle différentes.

6. Le dispositif de génération d'aérosol (100) selon l'une des revendications précédentes,
dans lequel une distance moyenne d'intervalle d'air entre le boîtier principal (200) et la fraction de couvercle (300) est comprise entre 0,1 et 5 mm.

7. Le dispositif de génération d'aérosol (100) selon l'une des revendications précédentes,
dans lequel l'intervalle de couvercle (400) comprend une première section de l'intervalle d'air (400) avec une première distance moyenne d'intervalle d'air, et une seconde section de l'intervalle d'air (400) avec une seconde distance moyenne d'intervalle d'air différente de la première distance d'intervalle d'air.

8. Le dispositif de génération d'aérosol (100) selon l'une des revendications précédentes,
dans lequel l'élément de couvercle (300) est muni d'un élément thermiquement conducteur (301) sur au moins une fraction ou sur la totalité de sa surface interne qui est tournée vers le boîtier principal (200) lorsque l'élément de couvercle (300) est rattaché de façon détachable au boîtier principal (200).

9. Le dispositif de génération d'aérosol (100) selon la revendication précédente, dans lequel l'élément thermiquement conducteur (301) comprend une bande, une couche, une tige, une barre, thermiquement conductrices, l'élément thermiquement conducteur (301) comprenant un matériau en cuivre.

10. Le dispositif de génération d'aérosol (100) selon l'une des revendications précédentes, comprenant un moyen de détection de couvercle (250) pour détecter si l'élément de couvercle (300) est ou non rattaché au boîtier principal (200).

11. Le dispositif de génération d'aérosol (100) selon la revendication 10, dans lequel le moyen de détection de couvercle (250) comprend un bouton ou un contacteur qui sont actionnés lorsque l'élément de couvercle (300) est rattaché au boîtier principal (200), et/ou dans lequel le moyen de détection de couvercle (250) comprend une circuiterie détectrice.

12. Le dispositif de génération d'aérosol (100) selon la revendication 11, dans lequel la circuiterie détectrice comprend un capteur Hall, et/ou dans lequel l'élément de couvercle (300) comprend, ou est, un élément magnétique qui peut être détecté par le capteur Hall lorsque l'élément de couvercle (300) est rattaché au boîtier principal (200), et/ou
dans lequel la circuiterie détectrice comprend un capteur optique pour détecter l'élément de couvercle (300) sous forme d'un panneau détachable lorsque le panneau détachable est rattaché au boîtier principal (200) du corps principal, et/ou
dans lequel la circuiterie détectrice comprend un capteur électrique qui comprend une pluralité d'éléments de mise en contact électrique pour venir en contact avec un élément électriquement conducteur prévu avec le couvercle lorsque l'élément de couvercle (300) est rattaché au boîtier principal (200) de telle manière qu'un courant puisse passer de l'un de la pluralité des éléments de mise en contact électrique à un autre de la pluralité des éléments de contact électrique en passant par l'élément électriquement conducteur.

13. Le dispositif de génération d'aérosol (100) selon l'une des revendications 11 à 12, comprenant une circuiterie pour le contrôle du fonctionnement du dispositif de génération d'aérosol (100) sur la base d'une information provenant du moyen de détection de couvercle (250), l'information comprenant une information relative à un premier état dans lequel il est détecté que l'élément de couvercle (300) est rattaché au boîtier principal (200), et relative à un second état dans lequel il est détecté que l'élément de couvercle (300) n'est pas rattaché au boîtier principal (200),
dans lequel le contrôle du fonctionnement du dispositif de génération d'aérosol (100) sur la base d'une information provenant du moyen de détection de couvercle (200) comprend l'empêchement ou l'inhibition de la génération d'un aérosol par le dispositif de génération d'aérosol (100) si l'information provenant du moyen de détection de couvercle (250) indique le second état, et l'activation de la génération d'un aérosol par le dispositif de génération d'aérosol (100) si l'information provenant du moyen de détection de couvercle (250) indique le premier état.

14. Le dispositif de génération d'aérosol (100) selon l'une des revendications précédentes, dans lequel il est prévu une partie d'interfaçage d'activation (220) au sein de l'intervalle d'air (400) sur la surface de la partie du boîtier principal (200) tourné vers l'élément de couvercle (300) lorsque l'élément de couvercle (300) est rattaché au boîtier principal (200), la partie d'interfaçage d'actionnement (220) comprenant un élément d'entrée (230) destiné à recevoir l'entrée d'actionnement par un utilisateur.

15. Le dispositif de génération d'aérosol (100) selon l'une des revendications précédentes, dans lequel il est prévu un élément de sortie (240) au sein de l'intervalle d'air (400) sur la surface de la partie du boîtier principal (200) tourné vers l'élément de couvercle (300) lorsque l'élément de couvercle (300) est rattaché au boîtier principal (200) pour indiquer une sortie d'actionnement du dispositif de génération d'aérosol (100), l'élément de sortie (240) comprenant un indicateur lumineux.
